# EUROPEAN PATENT APPLICATION

(11) **EP 3 825 934 A1**
(43) Date of publication of application: **26.05.2021**
(21) Application number: 19210385.1
(22) Date of filing: 20.11.2019
(51) Int. Cl.: G06Q 10/08, G06Q 50/28

(54) **AGGREGATE TRACKING OF TRANSPORTABLE ASSETS**

(71) Applicant: HERE Global B.V., 5611 ZT Eindhoven (NL)
(72) Inventor: VIITALA, Mika, 33100 Tampere (FI); MADINE, Simon, Edinburgh, EH10 4DY (GB)
(74) Representative: Cohausz & Florack

(57) **Abstract**

Inter alia, a method is disclosed comprising: obtaining one or more position estimates each indicative of a position of a physical tracking device, wherein the one or more position estimates are obtained based, at least in part, on an identification information of a transportable asset; and generating an aggregate trace information based, at least in part, on the obtained one or more position estimates, or updating the aggregate trace information based, at least in part, on the obtained one or more position estimates and one or more further position estimates of one or more further physical tracking devices provided that aggregate trace information is available prior to the obtaining of the one or more position estimates, wherein the aggregate trace information is associated with the transportable asset and indicates at least one position of the transportable asset. It is further disclosed an according apparatus, computer program and system.

## Description

### FIELD

The following disclosure relates to the field of tracking of one or more assets, or more particularly relates to systems, apparatuses, and methods for generating an aggregate trace information enabling one or more transportable assets to be tracked.

### BACKGROUND

In end-to-end asset tracking applications, such as tracking of one or more assets (e.g. goods or items) to be transported from an origin location to a destination location (also referred to as logistics/transportation journey or logistics/transportation chain), it is known that one or more transportable assets are tracked by multiple trackers in different phases of the logistics journey.

For instance, manufacturers want visibility on each asset they produce, in particular to track the asset from a manufacturing factory to a destination location. If the assets are of low value, the cost of the tracker hardware can easily be higher than the cost of the actual asset.

During its lifetime, an asset passes between multiple means of transport. Further, it is also inefficient to track individual assets separately if they all share the same means of transportation, e.g. truck, train or ship. In some cases, it is not technically possible to use actual trackers for the entire logistics journey, but the location representing a current location of the respective asset may need to be sourced elsewhere (e.g. in case of airplanes).

For instance, RFID (Radio Frequency Identification) low-cost tracking is only a passive technology. Further, additional external sensors may be required to activate and read the RFID tag.

### SUMMARY OF SOME EXEMPLARY EMBODIMENTS

However, passive tracking technology utilizing RFID is not suited for (near) real-time tracking or off-plan locating. Furthermore, active tracking technology hardware can easily be more expensive than low cost assets making (near) real-time tracking of such assets not worthy. In order to enable tracking of such assets, a solution is required that allows low cost tracking of assets.

It is thus, inter alia, an object of the present invention to provide a solution that enables (near) real-time tracking, in particular enabling (near) real-time tracking for one or more assets of a value being lower than the costs of tracking hardware.

According to a first exemplary aspect of the present invention, a method is disclosed, the method comprising:
- obtaining one or more position estimates each indicative of a position of a physical tracking device, wherein the one or more position estimates are obtained based, at least in part, on an identification information of a transportable asset; and
- generating an aggregate trace information based, at least in part, on the obtained one or more position estimates, or updating the aggregate trace information based, at least in part, on the obtained one or more position estimates and one or more further position estimates of one or more further physical tracking devices provided that aggregate trace information is available prior to the obtaining of the one or more position estimates,
   wherein the aggregate trace information is associated with the transportable asset and indicates at least one position of the transportable asset.

This method may for instance be performed and/or controlled by an apparatus, for instance a first apparatus server. Alternatively, this method may be performed and/or controlled by more than one apparatus, for instance a server cloud comprising at least two servers. For instance, the method may be performed and/or controlled by using at least one processor of the server or server cloud, and/or by using at least one component or module of the first apparatus.

According to a further exemplary aspect of the invention, a computer program is disclosed, the computer program when executed by a processor causing an apparatus, for instance a server, to perform and/or control the actions of the method according to the first exemplary aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, an apparatus is disclosed, configured to perform and/or control or comprising respective means for performing and/or controlling the method according to the first exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform and/or to control the method according to the first exemplary aspect.

The above-disclosed apparatus according to any aspect of the invention may be a module or a component for a device, for example a chip. Alternatively, the disclosed apparatus according to any aspect of the invention may be a device, for instance a server or server cloud. The disclosed apparatus according to any aspect of the invention may comprise only the disclosed components, for instance means, processor, memory, or may further comprise one or more additional components.

According to a second exemplary aspect of the present invention, a method is disclosed, the method comprising:
- determining a position estimate indicative of a position of the physical tracking device; and
- providing the position estimate,
- wherein the physical tracking device is associated with one or more transportable assets.

This method may for instance be performed and/or controlled by an apparatus, for instance a second apparatus (e.g. a low-capability device, an IoT (Internet-of-Things) device, or a physical tracking device (e.g. a tracker)). For instance, the method may be performed and/or controlled by using at least one processor of the apparatus, and/or by using at least one component or module of the second apparatus.

According to a further exemplary aspect of the invention, a computer program is disclosed, the computer program when executed by a processor causing an apparatus, for instance a server, to perform and/or control the actions of the method according to the second exemplary aspect

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, an apparatus is disclosed, configured to perform and/or control or comprising respective means for performing and/or controlling the method according to the second exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform and/or to control the method according to the second exemplary aspect.

The above-disclosed apparatus according to any aspect of the invention may be a module or a component for a device, for example a chip. Alternatively, the disclosed apparatus according to any aspect of the invention may be a device, for instance a server or server cloud. The disclosed apparatus according to any aspect of the invention may comprise only the disclosed components, for instance means, processor, memory, or may further comprise one or more additional components.

According to a further exemplary aspect of the invention, a system is disclosed, comprising:
At least one first apparatus according to any aspect of the invention as disclosed above, and one or more second apparatuses according to any aspect of the invention as disclosed above.

In the following, exemplary features and exemplary embodiments of all aspects of the present invention will be described in further detail.

The solution according to all exemplary aspects of the present invention enables a (near) real-time tracking of one or more transportable assets. As data representing a location information indicative of a location of a physical tracking device (e.g. an apparatus according to the second exemplary aspect of the present invention) is obtained (e.g. comes in), the respective data may be copied to a logical entity that can be generated to support tracking of the transportable asset. In this logical entity, e.g. an aggregate trace information is generated or updated. The aggregate trace information can be utilized (e.g. looked up), when tracking is requested, to provide as a result the current location of the tracker being associated (and located) in the vicinity of the transportable asset to be tracked. The logical entity comprising (e.g. storing) the aggregate trace information is also referred to as aggregate tracker within the meaning of the present invention.

The terms "position" and "location" are used herein as synonyms.

For instance, in a situation in which a single transportable asset is moving between multiple transportation vehicles and is having an aggregate trace comprised by or represented by a generated (e.g. built) aggregate trace information from different physical traces represented by one or more position estimates that are determined by one or more physical tracking devices, tracking of the single transportable asset is enabled. Real-time or near real-time location data (e.g. in the form of position estimates) may essentially be copied, e.g. from a location e.g. of a physical tracker (e.g. attached to a transportation vehicle) to an asset record (e.g. as represented by the logical entity of the aggregate tracker) that is associated with the respective transportable asset. There is no location information, e.g. in the form of one or more position estimates, prior to a first association of the transportable asset with a transportation vehicle and no trace after the transportable asset is removed from the final part of its journey and after the transportable asset has reached its destination. This ensures the security of the present invention, e.g. of a system according to all exemplary aspects of the present invention, only the location of the transportable asset is available to the authorized person (e.g. the recipient of the transportable asset, to name but one non-limiting example), and not the location(s) of the transportation vehicle(s) used along the logistics chain of the transportable asset.

In this way, the security of such a tracking is enhanced and the efficiency of such a tracking of one or more transportable assets is enhanced since even low-cost transportable assets can be tracked due to the usage of one or more physical tracking devices tracking a plurality (e.g. at least two) of transportable assets.

In order to find out where the physical tracking device (e.g. a tracker) that is associated with the transportable asset was, the respective position estimate(s) determined by the respective physical tracking device may for instance be copied to the aggregate trace information (e.g. a logical entity representing an aggregate tracker) as it comes (e.g. is provided to the logical entity). It may however not be known on what type of transportation vehicle the respective asset is loaded or is currently located which enhances the security even more since fraudulent parties do not know what to look out for. There is no chance of leakage since everything is stored in the aggregate trace information which can easily be removed (e.g. deleted) when the asset has reached its destination location.

The at least one apparatus performing and/or controlling the method according to the first exemplary aspect of the present invention may be comprised by or represented by a logical entity of an aggregate tracker. One or more of such pieces of aggregate trace information may for instance be stored in a memory, e.g. a database. A respective aggregate trace information is intended for one (single) transportable asset. In case a plurality of transportable assets are grouped together (e.g. assets of the same type), one piece of aggregate trace information may for instance be for the group of assets, to name but one non-limiting example.

One or more position estimates are obtained, e.g. by receiving the one or more position estimates via a communication interface. For instance, after a respective physical tracking device has determined its current position as a position estimate, this position estimate may for instance be obtained. Thus, a position estimate of the one or more position estimates is indicative of a position of a physical tracking device.

The one or more position estimates are obtained based, at least in part, on an identification information of a transportable asset, e.g. by checking whether or not the obtained one or more position estimates are intended for a respective transportable asset that is associated with the respective aggregate trace information. In case a respective position estimate is not intended for the respective transportable asset of the aggregate trace information, the respective position estimate(s) may for instance be deleted.

Some or all of the one or more position estimates may for instance stem from a source that is different from a physical tracking device. For instance, in case of transportation via an airplane, the respective position estimate may stem from a database comprising flight information of the respective airplane carrying the transportable asset. Thus, a respective position estimate of the one or more position estimates may for instance be obtained by retrieving it from a database, e.g. provided by a third party, such as a flight information database, airport dataset or the like, to name but a few non-limiting examples.

The aggregate trace information is generated based, at least in part, on the obtained one or more position estimates in case a respective aggregate trace information is not available for the asset. In case a respective aggregate trace information is already available (e.g. stored in a database) then the aggregate trace information is updated based, at least in part, on the obtained one or more position estimates and on one or more further position estimates of one or more further physical tracking devices that may for instance already be a part of the aggregate trace information prior to the obtaining of the one or more position estimates.

According to an exemplary embodiment of the all exemplary aspects of the present invention, the aggregate trace information is generated or updated upon the obtaining of the one or more position estimates.

The aggregate trace information is associated with a transportable asset. The aggregate trace information may for instance enable to track a position of the transportable asset along a transportation chain (also referred to as logistics chain), to name but one non-limiting example. The aggregate trace information may be generated or updated upon the obtaining (e.g. reception) of the one or more position estimates. The aggregate trace information comprises the one or more position estimates of the (single or individual) transportable asset in relation to the physical tracking device respectively its position.

A transportable asset, as used herein, is a unit of sale of a good or item. Such goods or items may be delivered to a store from warehouses or directly from vendors or manufacturer to stores, or to facilities that utilize the goods or items for further purposes. A plurality of such assets may be grouped or packaged together, e.g. in cases, on pallets, packages, containers, or the like.

As used herein, the term "transportation vehicle" is used to denote any modality of shipping or anything capable of carrying goods or items. Such a transportation vehicle may be, but not being limited to, cargo ships, barges, vans, trailers, cars, trucks, trains, cargo airplanes, containers, pallets, cubes, etc., to name but some non-limiting examples.

Multiple position estimates can be obtained (e.g. received) from the same physical tracking device, wherein each of the multiple position estimates may be represented by at least one piece of the one or more position estimates that are obtained.

A respective physical tracking device can be attached to a transportation package (e.g. a pallet, or a container), or to a transportation vehicle (e.g. a truck, train, freighter, or the like).

A respective transportable asset may for instance be transported along a transportation chain. Such a transportable asset may for instance be a good/items or a plurality of goods/items to be handled together, e.g. a plurality of goods or items packaged on a single palette.

According to an exemplary embodiment of the all exemplary aspects of the present invention, a respective position estimate of the one or more position estimates is further associated with a certain time and/or date.

The certain time and/or date may represent the time and/or date at which the respective position, estimates was determined, e.g. by a physical tracking device according to the second exemplary aspect, or at which the position estimate was obtained, e.g. from a database (e.g. a third party database comprising flight information).

According to an exemplary embodiment of the all exemplary aspects of the present invention, the aggregate trace information enables a granular position tracking of the transportable asset independent of a position of a transportation vehicle that is used for the transportation of the transportable asset.

By being associated with a time and/or date, or alternatively, by comprising or representing such a time and/or date, it is enabled to verify a history of position(s) of the transportable asset, in particular along the transportation chain of the asset. How granular such a history of one or more positions of the transportable asset is, is dependent upon the frequency at which one or more position estimates are obtained, as performed and/or controlled by the method according to the first exemplary aspect of the present invention.

According to an exemplary embodiment of the first exemplary aspect of the present invention, the method further comprises:
- obtaining an identification information of the transportable asset; and
- generating a logical entity comprising the aggregate trace information of the transportable asset based, at least in part, on the identification information, wherein the logical entity is generated prior to the obtaining of a first position estimate of the one or more position estimates or upon reception of a first position estimate of the one or more position estimates.

For instance, a specific transportable asset (e.g. of a plurality of transportable assets) may for instance be identified by its identification information. A respective identification information may for instance comprise or represent a string, or a character, or the like enabling identification of a specific transportable asset. The identification information of the transportable asset may for instance be stored, e.g. in a memory or a database that may for instance be comprised by or be connectable to the apparatus performing and/or controlling the method according to the first exemplary aspect of the present invention. The identification information may be used to identify the respective transportable asset, e.g. in case the transportable asset is packaged together with a plurality of other transportable assets. Further, based on a respective identification information, for instance, the position of the respective transportable asset that is associated with the identification information may for instance be determined, e.g. by requesting the position so that at least in part based on the aggregate trace information the position of the transportable asset can be provided. To name but one non-limiting example, the respective identification information may be associated with a current position (e.g. in the form of coordinates; x- and y-coordinates or latitude- and longitude-coordinates) of the transportable asset so that the position of the asset is at least determinable at least partially based on its identification information.

According to an exemplary embodiment of the all exemplary aspects of the present invention, the position of the transportable asset is trackable in real-time dependent upon the frequency with which the one or more position estimates are obtained.

The position estimate may for instance be provided (e.g. directly) after the determining of the position estimate. Then, upon obtaining (e.g. receiving) of the position estimate, the apparatus (e.g. server or server cloud) performing and/or controlling the method according to the first exemplary aspect of the present invention may generate or update the aggregate trace information. Immediately after that the most up-to-date location of the transportable asset to be tracked can be requested. In this way, (e.g. near) real-time tracking of the transportable asset is enabled.

The frequency of iterations of the determining of a (current) position estimate may for instance determine how granular the position of the transportable asset is trackable. Furthermore, the more position estimates are provided to the apparatus performing and/or controlling the method according to the first exemplary aspect of the present invention, and which are obtained by this apparatus according to the first exemplary aspect of the present invention, the more complete is a history of locations that may be stored or comprised by the aggregate trace information. Thus, a history of locations of the transportable asset may be considered to be dependent on how often a position estimate from one or more physical tracking devices of the transportation chain is obtained. A plurality of physical tracking devices may for instance be utilized during a logistics journey of a (e.g. single) transportable asset.

According to an exemplary embodiment of the first exemplary aspect of the present invention, the method further comprises:
- providing the aggregate trace information.

The (current) aggregate trace information may for instance be provided, e.g. by outputting the aggregate trace information. For instance, a request to be provided with the aggregate trace information may for instance be received. Based on such a request, the aggregate trace information, or a part of it, may for instance be provided, e.g. to the requestor of the aggregate trace information. To enable that only authorized users can receive the aggregate trace information, prior to requesting the aggregate trace information, the user may for instance be required to be authenticated, e.g. based on a username and password authentication process, to name but one non-limiting example. Of course, known other authentication processes can be utilized to authenticate the user requesting the aggregate trace. The request may for instance comprise an identification information of a transportable asset so that the user is provided with only with the aggregate trace information for one specific transportable asset.

According to an exemplary embodiment of the first exemplary aspect of the present invention, the physical tracking device is associated with the transportable asset.

In case the transportable asset is loaded onto a transportation vehicle, e.g. the respective physical tracking device being in charge of the tracking for this part of the logistics chain, may for instance obtain (e.g. receive) an identification information of the transportable asset. Then, the physical tracking device may for instance provide a current position estimate together with the respective identification information of the transportable asset enhancing mapping of the obtained position estimate to the respective transportable asset, as is performed and/or controlled according to the first exemplary aspect of the present invention.

The method according to the second exemplary aspect of the present invention may for instance be performed and/or controlled by a physical tracking device. The physical tracking device may for instance determine a position estimate indicative of a position of the physical tracking device; and provide the position estimate. The position estimate may for instance be provided (e.g. sent) to the apparatus (e.g. a server or server cloud) performing and/or controlling the method of the first exemplary aspect of the present invention.

The (e.g. coarse) position estimate may be determined or triggered to be determined based on GNSS-based and/or non-GNSS-based positioning. Examples for GNSS-based positioning are GPS (Global Positing System), GALILEO, GLONASS (Globalnaja nawigazionnaja sputnikowaja sistema), and examples for non-GNSS-based positioning are fingerprinting based on radio signals sent by e.g. BT (Bluetooth) and/or BLE (Bluetooth Low Energy) beacons and/or WLAN (Wireless Local Area Network) access points, to name but a few non-limiting examples.

The physical tracking device is associated with one or more transportable assets. The physical tracking device is associated with one or more transportable assets, wherein the physical tracking device is currently located in their respective vicinity. The physical tracking device may be associated with one or more transportable assets at least during a part of the logistics chain at which a respective asset is transported. A respective transportable asset may for instance be associated to a plurality of different physical tracking devices throughout the transportation along one (single) logistics chain.

The physical tracking device may for instance be portable (e.g. weigh less than 3, 2, 1, 0.5, 0.2 kg, 0.1 kg or less). The physical tracking device may for instance comprise or be connectable to means for outputting information or sound, e.g. in the form of spoken commands or information. The physical tracking device may for instance comprise or be connectable to one or more sensors for determining the devices position, such as for instance a GNSS (Global Navigation Satellite System) receiver, in the form of a GPS receiver. The physical tracking device may for instance comprise or be connectable to one or more sensors, e.g. in the form of an accelerometer and/or a gyroscope for gathering (e.g. measuring) further information. The physical tracking device may for instance comprise or be connectable to a receiver and/or a transmitter (e.g. a transceiver) for receiving and/or sending information. For instance, the physical tracking device may comprise one or more radio receivers (e.g. radio transceivers) to gather measurements based on GNSS- or non-GNSS-based positioning signals, which may for instance enable a (e.g. coarse) position estimate indicative of the devices position to be determined or triggered to be determined, and/or to be comprised by one or more position estimates that are determined. The physical tracking device may for instance be suitable for outdoor and/or indoor navigation respectively positioning. The physical tracking device may for instance comprise various other components like a user interface for receiving user input.

According to an exemplary embodiment of the second exemplary aspect of the present invention, the determining of the position estimate is based, at least in part, on a GNSS-based positioning system or a non GNSS-based positioning system.

The physical tracking device may for instance have GNSS-capability. A user tracking the transportable asset can further benefit in case the physical tracking device has in addition or in alternative to a GNSS-capability a capability to use non-GNSS-based positioning system(s)/technology, such as cellular/non-cellular positioning technologies, e.g. in terms of time-to-first-fix and power consumption. Also, not all applications require highly accurate GNSS-based position (e.g. in situation(s) or location(s) where an accurate position estimate cannot be determined, it might be sufficient to use cell-based position estimate enabling at least an area in which the transportable asset is located to be determined). Also, cellular/non-cellular positioning technologies work indoors and in urban canyons, which are generally challenging environments for GNSS-based technologies.

The position estimate may for instance be determined by a positioning. The positioning can function in two modes. The first mode is a terminal-assisted mode, in which the physical tracking device (e.g. as a terminal) performs the measurements of the cellular and/or non-cellular air interface, and provides the measurements to a remote server, which in turn provides the position estimate back to the physical tracking device.

The second mode is the terminal-based mode, in which the physical tracking device has a local copy of a radio map (or most likely, a subset of a global radio map).

Such a radio map may be configured to enable devices, such as the physical tracking device, to estimate their position at least partially based on this radio map when the devices are located in the area covered by the radio map. For example, the radio map is represented by radio map information which may be provided (e.g. transmitted) by a positioning server to the physical tracking device and/or which may be hold available by the physical tracking device (e.g. stored in memory means of the physical tracking device (s)). For example, the radio map contains or represents a respective radio model for a plurality of radio nodes transmitting (e.g. broadcasting) radio signals that are observable within the area covered by the radio map. If the radio map covers an area (e.g. geographic area) or a venue (e.g. building), the radio map may further contain or represent, for a floor of the venue, or for a height within the area, a respective radio model for a plurality of radio nodes transmitting (e.g. broadcasting) radio signals that are observable on the respective floor of the venue.

Such radio signals may be terrestrial radio signals. Examples of such a terrestrial radio signal are a BT signal, a BLE signal, a cellular network signal or a WLAN signal. The Bluetooth standards are specified by the Bluetooth Special Interest Group and are presently available under https://www.bluetooth.com/. A cellular network may for example be mobile phone network like a 2G/3G/4G/5G cellular communication network. The 2G/3G/4G/5G cellular radio communication standards are developed by the 3GPP and presently available under http://www.3gpp.org/. WLAN is for example specified by the standards of the IEEE 802.11 family (http://www.ieee.org/).

Such (a) radio node(s) may for instance be used for indoor positioning and/or floor detection, e.g. according to BT- and/or BLE- specification, or may for instance be a Wi-Fi Access Point for indoor positioning and/or floor detection, e.g. according to the WLAN- specification.

Such (a) radio node(s), e.g. located within a certain area, may for instance comprise or be connectable to a transceiver, e.g. according to the BT-, BLE, and/or WLAN-specification to provide wireless-based communication. Each radio node of the one or more radio nodes may for instance use such a transceiver for transmitting and/or broadcasting one or more radio signals, e.g. comprising or containing one or more information and/or potentially manipulated radio signals and/or radio signal parameters.

Such a subset of a radio map or a global radio map may for instance be downloaded by the physical tracking device, e.g. from a remote server for a(n) (geographic) area of interest (e.g. a small area around the current location, or for a whole country, to name but a few non-limiting examples) out of a global radio map comprised a plurality of such subsets. Such a subset can further be pre-installed to the physical tracking device during the manufacturing, but even in that case the data comprising the (global) radio map may be needed to be refreshed at some point.

For instance, for resolving location indoors, it may be relied on fusion of GPS (Global Positioning System) and sensor data. These solutions extend position estimation to GNSS-denied areas based on the sensor data. Other approaches rely on probes collected outdoors, in order to localize probes located indoors (probes collected outdoors and indoors contain same WiFi access point(s) and can, thus, be related to each other.

The (e.g. coarse) position estimate of the physical tracking device may for example indicate a pre-determined area covering the (e.g. absolute) position of the physical tracking device, but may not indicate the specific, thus more accurate, (e.g. absolute) position of the physical tracking device. The GNSS-based and/or the non-GNSS-based positioning may for instance use one or more measurements of radio signals or radio signal parameters to be considered. Each of those measurements may for instance be considered to be indicative of whether or not the physical tracking device is located in the vicinity of or within an area where the respective radio signals and/or radio signal parameters were gathered (e.g. measured or captured) as a part of the determining of the position estimate. For example, the physical tracking device may be considered to be in the vicinity of or within an area, if the respective radio signals and/or radio signal parameters represented by the one or more measurements indicate a pre-determined area and/or venue.

According to an exemplary embodiment of all exemplary aspects of the present invention, the physical tracking device is associated with the one or more transportable assets based, at least in part, on one or more pieces of identification information of the one or more transportable assets.

For instance, a specific physical tracking device (e.g. of a plurality of physical tracking device that may be utilized along a logistics chain) may for instance be identified by its identifier (ID) or an identifier associated with the respective physical tracking device. For instance, the identifier of a respective physical tracking device may be stored in a database enable identification of the respective physical tracking device.

According to an exemplary embodiment of the second exemplary aspect of the present invention, the determining of the position estimate and the providing of the position estimate is performed and/or controlled multiple times.

The determining of the position estimate and the providing of the position estimate are performed and/or controlled multiple times in case the steps are performed and/or controlled at least twice. For instance, to enable a steady tracking of the transportable asset along a logistics chain, a respective physical tracking device currently tracking a position indicative of the current position of the transportable asset, may for instance perform and/or control the steps of the determining of a position estimate and then providing the determined position estimate after a pre-determined time interval has elapsed. After the steps of the determining of a position estimate and then of the providing of the determined position estimate have been performed and/or controlled, it is initiated another lapse of the pre-determined time interval so that then the steps of the determining of a position estimate and then providing the determined position estimate are performed and/or controlled, and so on. In this way, (near) real-time tracking of the transportable asset is enabled.

According to an exemplary embodiment of all exemplary aspects of the present invention, wherein the physical tracking device is moved along with the transportable asset by a transportation vehicle used for a transportation of the transportable asset at least for a part of a transportation chain.

The physical tracking device may for instance be comprised by the transportation vehicle. In case the transportable asset is loaded onto the transportation vehicle, the transportable asset can be associated with the respective physical tracking device comprised by the transportation vehicle. Alternatively, the physical tracking device may for instance not be comprised by the transportation vehicle. The physical tracking device may be comprised by a packaging for a group of transportable assets comprising the transportable asset, to name but one non-limiting example. It is not required that the physical tracking device is (e.g. directly) associated with the transportation vehicle, in particular to enable flexibility to adapt example embodiments of the present invention to very different use cases.

The features and example embodiments of the invention described above may equally pertain to the different aspects according to the present invention.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic block diagram of a system according to an exemplary aspect of the present invention;
- Fig. 2: a flowchart showing an example embodiment of a method according to the first exemplary aspect of the present invention;
- Fig. 3: a flowchart showing an example embodiment of a method according to the second exemplary aspect of the present invention;
- Fig. 4: a schematic visualization of an aggregate trace information of all exemplary aspects of the present invention;
- Fig. 5: a block diagram of an apparatus configured to perform the method according to the first exemplary aspect of the present invention; and
- Fig. 6: a block diagram of an apparatus configured to perform the method according to the second exemplary aspect of the present invention.

### DETAILED DESCRIPTION OF SOME EXEMPLARY EMBODIMENTS

The following description serves to deepen the understanding of the present invention and shall be understood to complement and be read together with the description as provided in the above summary section of this specification.

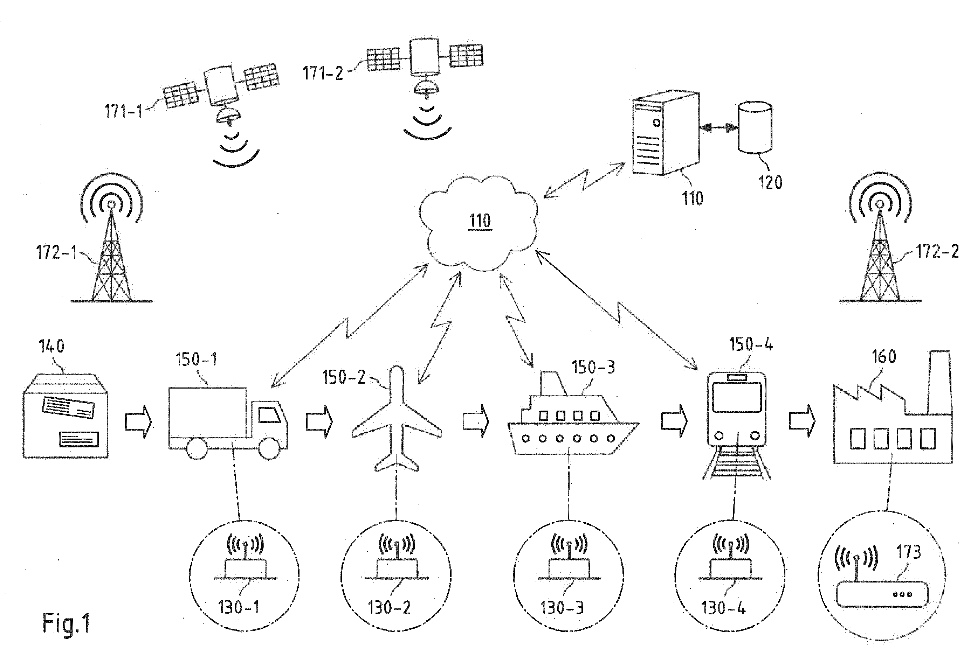

Fig. 1 shows a schematic high-level block diagram of a system 100 that can be utilized by example embodiments according to all exemplary aspects of the present invention.

System 100 comprises a tracking service, e.g. represented by the cloud service 110. The cloud service 110 may comprise one or more servers, such as server 111, providing services at least partially jointly. Alternatively, such a tracking service may be provided by the server 111. The system 100 comprises an optional database 112 that is connected to the server 111, or that may be comprised by the server 111 forming one entity. The server 111 and the optional database 112 may be part of the cloud service 110.

The system 100 further comprises a transportable asset 140 that is to be tracked by the tracking service. The system 100 comprises one or more transportation vehicles, e.g. transportation vehicles 150-1 to 150-4 from which four different exemplary representations are shown: a truck, a cargo airplane, a cargo ship, and a train, to name but a few non-limiting examples. Each of the transportation vehicles 150-1 to 150-4 may for instance comprise a physical tracking device (e.g. a tracker). In Fig. 1, transportation vehicle 150-1 comprises the physical tracking device 130-1, the transportation vehicles 150-2 comprises the physical tracking device 130-2 and so forth. According to all exemplary aspects of the present invention, it is not mandatory that such a physical tracking device is comprised by a transportation vehicle. Alternatively, such a physical tracking device may be comprised (e.g. attached or mounted) to the asset 140 itself, or to a container, a palette or the like comprising (e.g. carrying) multiple (at least two) of such assets 140, or at least the asset 140.

System 100 further comprises one or more entities of a GNSS-based and/or non-GNSS-based positioning system enabling e.g. the physical tracking devices 130-1 to 130-4 to determine one or more position estimates. For instance, entities of a GNSS-based positioning system are the satellites 171-1, 171-2. Entities of a non-GNSS-based positioning system are the base stations 172-1, 172-2, and the beacon/access point (e.g. according to wireless and/or BT and/or BLE communication standards) 173.

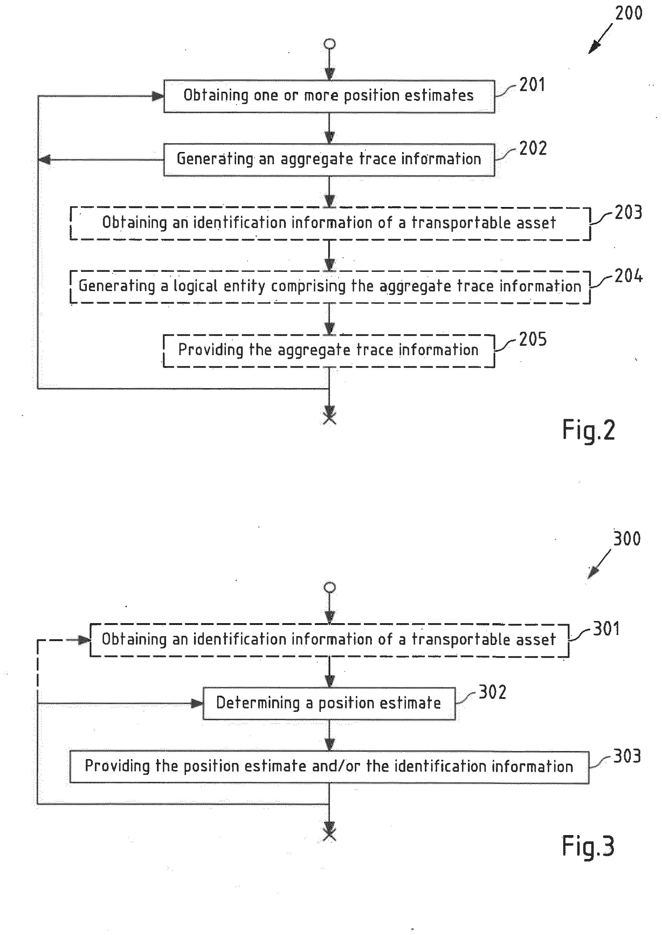

According to example embodiments of all exemplary aspects of the present invention, a transportable asset's (e.g. asset 140 of Fig. 1) complete location history is determined from portions of location history from multiple different physical tracking devices (e.g. the physical tracking device 130-1 to 130-4 of Fig. 1). The asset 140 itself does not need to have such a physical tracking device 130-1 to 130-4 attached to it. When the asset 140 is put into the transport, it may for instance be associated with the respective physical tracking device 130-1 to 130-4 of the transport. When the asset 140 is transferred from one transportation vehicle (e.g. transportation vehicles 1501-1 to 150-4 of Fig. 1) to another transportation vehicle or into another crate, the system may update to associate the asset 140 with the new physical tracking device (e.g. attached to the new/other transportation vehicle). In the aggregate trace information it is kept track of the location traces of the physical tracking devices as they provide their up-to-date determined position estimates (and/or other sources for position data). For instance, system 100 may associate relevant pieces of traces as comprised or represented by one or more obtained pieces of position estimates (see step 201 of Fig.2) to logical entities of the respective assets that are being tracked. Within the meaning of the present invention, the term aggregate tracker is used representing the virtual/logical entity that maintains the association between the respective asset (e.g. as represented by an identification information that is unique and assigned or associated with the asset, e.g. stored in a look-up table (e.g. of database 112), to name but one non-limiting example) and their location traces (e.g. represented or comprised by the one or more pieces of position estimates).

Such an aggregate tracker may be an (e.g. virtual or logical) entity in a tracking service or cloud service 110, maintaining associations between an asset and at least one concrete physical tracking device (any of the physical tracking devices 130-1 to 130-4). Such a physical tracking device can be a hardware device communicating directly with the tracking service or the cloud service 110.

From the point of the tracking service respectively the cloud service 110, the concrete tracker may be considered to be a source of location trace data. Additional concrete physical tracking devices can be associated with the aggregate tracker later. Only one concrete physical tracking device may be active at a time in the context of aggregate tracker. The same concrete physical tracking devices may be activated/deactivated multiple times along a transportation/logistics chain. It is enabled to determine historical position without any association of the asset with one or more transportation vehicles, only the respective position(s)/time(s) at which the asset was at a certain position can be filtered.

Fig. 2 is a flowchart 200 showing an example embodiment of a method according to the first exemplary aspect of the present invention. This flowchart 200 may for instance be performed by an apparatus, e.g. server (e.g. server 111 of Fig. 1), and/or a cloud service (e.g. cloud service 110 of Fig. 1).

In a first step 201, one or more position estimates are obtained, e.g. received. The one or more position estimates may for instance be received in sequence from one or more physical tracking devices (e.g. physical tracking devices 130-1 to 130-4 of Fig. 1). The one or-more physical tracking devices may for instance determine a position estimate and provide (e.g. send) the respective position estimate to the apparatus performing and/or controlling the flowchart 200. The one or more position estimates may for instance be provided to the apparatus performing and/or controlling the flowchart 200 directly, e.g. via a.wireless communication connection, or via an entity (not shown in Fig. 1) that provides (e.g. relays) the one or more position estimates upon reception. The one or more position estimates may for instance be obtained (e.g. received) in sequence, e.g. directly after the respective position estimate was determined by the respective physical tracking device (see step 303 of Fig. 3), or more than one position estimate may be obtained (e.g. received) in parallel. In the latter case, a respective physical tracking device may have determined one or more position estimates at different times, and when it has a communication connection available, it establishes a communication connection to provide (e.g. transmit) the one or more position estimates to the apparatus performing and/or controlling the flowchart 200.

In a second step 202, an aggregate trace information is generated. The aggregate trace information is generated (e.g. built) at least partially based on the one or more position estimates. In case an aggregate trace information is already present (e.g. in a database such as database 112 of Fig. 1), the aggregate trace information is updated at least partially based on the one or more position estimates.

In an optional third step 203, an identification information of or associated with a transportable asset (e.g. asset 140 of Fig. 1) is obtained (e.g. received). Such an identification information may for instance be received together with a position estimate of the one or more position estimates. Thus, such an identification information may for instance accompany a position estimate or more than one position estimate of the one or more position estimates. The identification information may for instance be obtained in the same way as disclosed above for the one or more pieces of position estimates that are obtained (see step 201).

In an optional fourth step 204, a logical entity is generated. For instance, to enable example embodiments according to all exemplary aspect of the present invention, in case an identification information is obtained, a transportable asset (e.g. transportable asset 140 of Fig. 1) to be transported along a transportation chain may have started the route to its destination location (e.g. warehouse 160 of Fig. 1). To enable generating of the aggregate trace information, in example embodiments of all exemplary aspects of the present invention, a logical entity executed by a cloud service (e.g. cloud service 110 of Fig. 1) or by the server 111 of Fig. 1 may be utilized.

In an optional step 205, the (e.g. current) aggregate trace information is provided, e.g. transmitted to a requestor.

It will be understood that at least some of the steps 201 to 205 may for instance be performed and/or controlled multiple times (e.g. at least twice). For instance, every time a new position estimate is obtained in step 201, one or more of the further steps 202 to 205 of the flowchart 200 may for instance be performed and/or controlled. This is shown in the flowchart 200 by the arrows pointing back to the step 201.

Fig. 3 is a flowchart 300 showing an example embodiment of a method according to the second exemplary aspect of the present invention. This flowchart 300 may for instance be performed by an apparatus, e.g. physical tracking device (e.g. any of the physical tracking devices 130-1 to 130-4 of Fig. 1).

In an optional first step 301, an identification information of a transportable asset (e.g. transportable asset 140 of Fig. 1) is obtained (e.g. received). The identification information may for instance be received from a cloud service (e.g. cloud service 110 of Fig. 1) providing tracking services to users, to name but one non-limiting example. Such a tracking service may for instance be run by a logistics operator. By obtaining such an identification information, the physical tracking device may for instance be associated with the respective transportable asset so that the physical tracking device is enabled e.g. to provide a determined position estimate indicative of its (e.g. current and estimated) position together with the respective identification information. In this way, it is enabled to associate the physical tracking device respectively its position with a position of the transportable asset It is enabled to track a/the transportable asset along a transportation/logistics chain.

In a second step 302, a position estimate is determined (e.g. estimated). The position estimate may for instance be determined multiple times (e.g. at least twice). The position estimate may for instance be determined based on one or more signals, e.g. as observable from a GNSS-based or a non-GNSS-based positioning system, to name but a few non-limiting examples.

In a third step 303, the position estimate determined in step 302 is provided (e.g. output or transmitted). In particular, the position estimate is provided directly after it is determined in step 302 so that the position as represented or comprised by the position estimate can be utilized in real-time applications, to name but one non-limiting example. Separately or together with the position estimate, one or more identification information (obtained in step 301) may for instance be provided to the same recipient to which the position estimate is provided. In case more than one piece of identification information is provided (e.g. together with or accompany the position estimate), for instance multiple assets are currently associated with the respective physical tracking device, in this case, e.g. the physical tracking device may be attached (e.g. mounted) to a transportation vehicle (e.g. a truck, a freighter, a cargo ship, to name but a few non-limiting examples), wherein the position of this particular physical tracking device represents the (e.g. current) position of all of the assets loaded (currently) to said transportation vehicle.

It will be understood that at least some of the steps 301 to 303 may for instance be performed and/or controlled multiple times (e.g. at least twice). This is shown in the flowchart 300 by the arrows pointing back to the step 301. For instance, a position estimate (step 301) may be determined steadily, or in certain (e.g. pre-defined) time intervals, so that a position of a/the transportable asset can be tracked e.g. in (e.g. near) real-time.

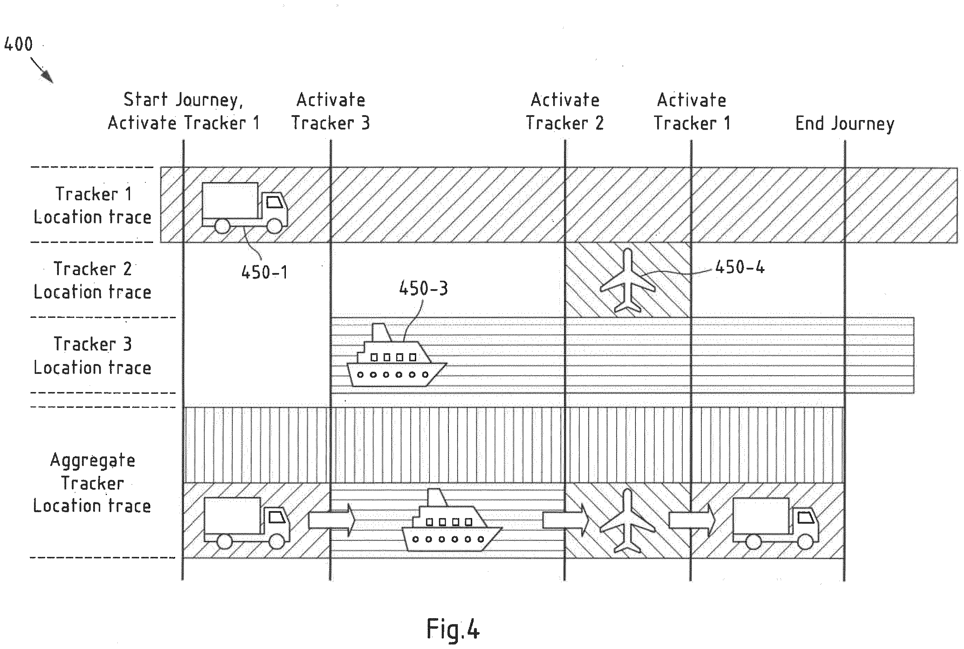

Fig. 4 shows a schematic visualization of an aggregate trace information of all exemplary aspects of the present invention.

One of the options for managing concrete physical tracking devices is to model them as a stack, wherein the topmost tracker is active implicitly (see "Tracker 1 Location Trace" in Fig. 4). If a previously deactivated physical tracking device needs to be activated again, it can be pushed again on top of the stack. Location trace represented or comprised by a respective position estimate of each concrete physical tracking device may be maintained independently.

The aggregate trace information comprising one or more position estimates (e.g. as location traces) may for instance be generated (e.g. built or formed) by combining the subsets of concrete tracker location traces for those periods that they have been activated in the context of an aggregate tracker. The same concrete physical tracking device may be associated at the same time to multiple aggregate physical tracking devices with differing activation periods.

Fig. 4 illustrates the following example:
There are multiple low-value assets. Their logistic journey starts on a single truck 450-1. Then the load comprising the multiple assets is split between multiple transportation vehicles since e.g. the assets are intended to be transported to different destination locations. The manufacturer of the multiple assets wants visibility on the logistics chain of each individual asset of the multiple assets. For each of the multiple assets, an aggregate trace information is generated comparable to the one visualized in Fig. 4.

At first, the location trace of the asset of Fig. 4 is loaded onto transportation vehicle 450-1 (e.g. a truck). The respective physical tracking device or tracker of the transportation vehicle 450-1 is activated. Then, the asset is loaded onto transportation vehicle 450-3 (e.g. a cargo ship). By loading the asset onto the transportation vehicle 450-3, the respective physical tracking device or tracker of the transportation vehicle 450-3 is activated. Not shown in Fig. 4, at this point in time the row of the transportation vehicle 450-3 was pushed on top of the stack. Afterwards, the asset is loaded onto transportation vehicle 450-2 (e.g. a cargo airplane). By loading the asset onto the transportation vehicle 450-2, the respective physical tracking device or tracker of the transportation vehicle 450-2 is activated. Finally, the asset is loaded again on the truck representing transportation vehicle 450-1, e.g. to return it to the manufacturer, to name but one non-limiting example. In the bottom row, the aggregate tracker location trace generated based on all of the separate information (e.g. the respective position estimates of the physical tracking devices) is shown.

This enables to track low value assets cost effectively. Further, it enables to utilize multiple sources of location tracking data for tracking single asset(s).

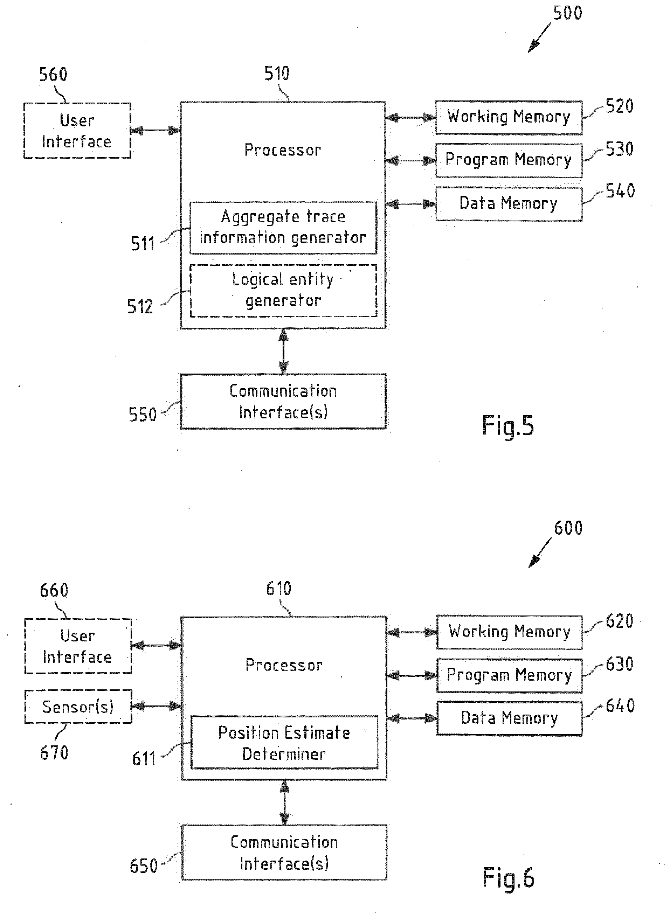

Fig. 5 is a schematic block diagram of an apparatus 500 according to an exemplary aspect of the present invention, which may for instance represent the cloud 110 or the server 111 or the cloud 110 comprising the server 111 of Fig. 1.

Apparatus 500 comprises a processor 510, working memory 520, program memory 530, data memory 540, communication interface(s) 550, and an optional user interface 560.

Apparatus 500 may for instance be configured to perform and/or control or comprise respective means (at least one of 510 to 560) for performing and/or controlling the method according to the first exemplary aspect of the present invention. Apparatus 500 may as well constitute an apparatus comprising at least one processor (510) and at least one memory (520) including computer program code, the at least one memory and the computer program code configured to, with the at least one processor, cause an apparatus, e.g. apparatus 500 at least to perform and/or control the method according to the first exemplary aspect of the invention of the present invention.

Processor 510 may for instance comprise an aggregate trace information generator 511 as a functional and/or structural unit. Aggregate trace information generator 511 may for instance be configured to determine a position estimate (see step 202 of Fig. 2). Processor 510 may for instance comprise an optional logical entity generator 512 as a functional and/or structural unit. Logical entity generator 512 may for instance be configured to determine a position estimate (see step 204 of Fig. 2).Processor 510 may for instance further control the memories 520 to 540, the communication interface(s) 550, and the optional user interface 560.

Processor 510 may for instance execute computer program code stored in program memory 530, which may for instance represent a computer readable storage medium comprising program code that, when executed by processor 510, causes the processor 510 to perform the method according to the first exemplary aspect of the present invention.

Processor 510 (and also any other processor mentioned in this specification) may be a processor of any suitable type. Processor 510 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 510 may for instance be an application processor that runs an operating system.

Program memory 530 may also be included into processor 510. This memory may for instance be fixedly connected to processor 510, or be at least partially removable from processor 510, for instance in the form of a memory card or stick. Program memory 530 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 530 may also comprise an operating system for processor 510. Program memory 530 may also comprise a firmware for apparatus 500.

Apparatus 500 comprises a working memory 520, for instance in the form of a volatile memory. It may for instance be a Random Access Memory (RAM) or Dynamic RAM (DRAM), to give but a few non-limiting examples. It may for instance be used by processor 510 when executing an operating system and/or computer program.

Data memory 540 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 540 may for instance store one or more position estimates, one or more pieces of aggregate trace information, one or more pieces of identification information of one or more transportable assets, one or more generated logical entities within the meaning of the present invention, or a combination thereof, to name but a few non-limiting examples.

Communication interface(s) 550 enable apparatus 500 to communicate with other entities, e.g. with the physical tracking device 130 (e.g. any of the physical tracking devices 130-1 to 130-4) of Fig. 1. Communication interface(s) may enable apparatus 500 to communicate with other entities, for instance with entities (e.g. 171-1, 171-2, 172-1, 172-2, 173 of Fig. 1) of a GNSS-based and/or a non-GNSS-based positioning system. The communication interface(s) 550 may for instance comprise a wireless interface, e.g. a cellular radio communication interface and/or a WLAN interface) and/or wire-bound interface, e.g. an IP-based interface, for instance to communicate with entities via the Internet.

User interface 560 is optional and may comprise a display for displaying information to a user and/or an input device (e.g. a keyboard, keypad, touchpad, mouse, etc.) for receiving information from a user.

Fig. 6 is a schematic block diagram of an apparatus 600 according to an exemplary aspect of the present invention, which may for instance represent the physical tracking device 130 (e.g. any of the physical tracking devices 130-1 to 130-4) of Fig. 1.

Apparatus 600 comprises a processor 610, working memory 620, program memory 630, data memory 640, communication interface(s) 650, an optional user interface 660 and an optional sensor(s) 670.

Apparatus 600 may for instance be configured to perform and/or control or comprise respective means (at least one of 610 to 670) for performing and/or controlling the method according to the second exemplary aspect of the present invention. Apparatus 600 may as well constitute an apparatus comprising at least one processor (610) and at least one memory (620) including computer program code, the at least one memory and the computer program code configured to, with the at least one processor, cause an apparatus, e.g. apparatus 600 at least to perform and/or control the method according to the second exemplary aspect of the invention of the present invention.

Processor 610 may for instance comprise a position estimate determiner 611 as a functional and/or structural unit. Position estimate determiner 611 may for instance be configured to determine a position estimate (see step 302 of Fig. 3). Processor 610 may for instance further control the memories 620 to 640, the communication interface(s) 650, the optional user interface 660 and the optional sensor(s) 670.

Processor 610 may for instance execute computer program code stored in program memory 630, which may for instance represent a computer readable storage medium comprising program code that, when executed by processor 610, causes the processor 610 to perform the method according to the second exemplary aspect of the present invention.

Processor 610 (and also any other processor mentioned in this specification) may be a processor of any suitable type. Processor 610 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 610 may for instance be an application processor that runs an operating system.

Program memory 630 may also be included into processor 610. This memory may for instance be fixedly connected to processor 610, or be at least partially removable from processor 610, for instance in the form of a memory card or stick. Program memory 63.0 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 630 may also comprise an operating system for processor 610. Program memory 630 may also comprise a firmware for apparatus 600.

Apparatus 600 comprises a working memory 620, for instance in the form of a volatile memory. It may for instance be a Random Access Memory (RAM) or Dynamic RAM (DRAM), to give but a few non-limiting examples. It may for instance be used by processor 610 when executing an operating system and/or computer program.

Data memory 640 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 640 may for instance store one or more position estimates, one or more pieces of aggregate trace information, one or more pieces of identification information of one or more transportable assets, one or more generated logical entities within the meaning of the present invention, or a combination thereof, to name but a few non-limiting examples.

Communication interface(s) 650 enable apparatus 600 to communicate with other entities, e.g. with server 111 or with one or more physical tracking devices (e.g. 130-1 to 130-4) of Fig. 1. Communication interface(s) may enable apparatus 600 to communicate with other entities, for instance with entities (e.g. 171-1, 171-2, 172-1, 172-2, 173 of Fig. 1) of a GNSS-based and/or a non-GNSS-based positioning system. The communication interface(s) 650 may for instance comprise a wireless interface, e.g. a cellular radio communication interface and/or a WLAN interface) and/or wire-bound interface, e.g. an IP-based interface, for instance to communicate with entities via the Internet.

User interface 660 is optional and may comprise a display for displaying information to a user and/or an input device (e.g. a keyboard, keypad, touchpad, mouse, etc.) for receiving information from a user.

Sensor(s) 670 are optional and may for instance comprise a barometric sensor, e.g. to gather pressure information.

Some or all of the components of the apparatus 600 may for instance be connected via a bus. Some or all of the components of the apparatus 600 may for instance be combined into one or more modules.

The following embodiments shall also be considered to be disclosed:
Embodiment 1: An apparatus comprising at least one processor and at least one memory including computer program code, the at least one memory and the computer program code configured to, with the at least one processor, cause an apparatus at least to perform:
   - obtaining one or more position estimates each indicative of a position of a physical tracking device, wherein the one or more position estimates are obtained based, at least in part, on an identification information of a transportable asset; and
   - generating an aggregate trace information based, at least in part, on the obtained one or more position estimates, or updating the aggregate trace information based, at least in part, on the obtained one or more position estimates and one or more further position estimates of one or more further physical tracking devices provided that aggregate trace information is available prior to the obtaining of the one or more position estimates,
      wherein the aggregate trace information is associated with the transportable asset and indicates at least one position of the transportable asset.
Embodiment 2: The apparatus according to embodiment 1, wherein the aggregate trace information is generated or updated upon the obtaining of the one or more position estimates.
Embodiment 3: The apparatus according to embodiment 1 or embodiment 2, wherein a respective position estimate of the one or more position estimates is further associated with a certain time and/or date.
Embodiment 4: The apparatus according to any of the embodiments 1 to 3, wherein the aggregate trace information enables a granular position tracking of the transportable asset independent of a position of a transportation vehicle that is used for a transportation of the transportable asset.
Embodiment 5: The apparatus according to any of the embodiments 1 to 4, the at least one memory and the computer program code configured to, with the at least one processor, cause the apparatus further to perform:
   - obtaining an identification information of the transportable asset; and
   - generating a logical entity comprising the aggregate trace information of the transportable asset based, at least in part, on the identification information, wherein the logical entity is generated prior to the obtaining of a first position estimate of the one or more position estimates or upon reception of a first position estimate of the one or more position estimates.
Embodiment 6: The apparatus according to any of the embodiments 1 to 5, wherein the position of the transportable asset is trackable in real-time dependent upon the frequency with which the one or more position estimates are obtained.
Embodiment 7: The apparatus according to any of the embodiments 1 to 6, the at least one memory and the computer program code configured to, with the at least one processor, cause the apparatus further to perform:
   - providing the aggregate trace information.
Embodiment 8: An apparatus comprising at least one processor and at least one memory including computer program code, the at least one memory and the computer program code configured to, with the at least-one processor, cause an apparatus at least to perform:
   - determining a position estimate indicative of a position of the physical tracking device; and
   - providing the position estimate,
   - wherein the physical tracking device is associated with one or more transportable assets.
Embodiment 9: The apparatus according to embodiment 8, wherein the physical tracking device is associated with the one or more transportable assets based, at least in part, on one or more pieces of identification information of the one or more transportable assets.
Embodiment 10: The apparatus according to embodiment 8 or embodiment 9, wherein the determining of the position estimate and the providing of the position estimate is performed and/or controlled multiple times.
Embodiment 11: The apparatus according to any of the embodiments 8 to 10, wherein the physical tracking device is moved along with the transportable asset by a transportation vehicle used for a transportation of the transportable asset at least for a part of a transportation chain.
Embodiment 12: The apparatus according to any of the embodiments 8 to 11, wherein the determining of the position estimate is based, at least in part, on a GNSS-based positioning system or a non GNSS-based positioning system.
Embodiment 13: A system, comprising:
   - at least one apparatus according any of the embodiments 1 to 7; and
   - one or more apparatuses according to any of the embodiments 8 to 12.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature of the invention and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The invention has been described above by means of example embodiments. It should be noted that there are alternative ways and variations which are obvious to a skilled person in the art and can be implemented without deviating from the scope of the appended claims.

## Claims

1. A method, performed by at least one apparatus, comprising:
- obtaining one or more position estimates each indicative of a position of a physical tracking device, wherein the one or more position estimates are obtained based, at least in part, on an identification information of a transportable asset; and
- generating an aggregate trace information based, at least in part, on the obtained one or more position estimates, or updating the aggregate trace information based, at least in part, on the obtained one or more position estimates and one or more further position estimates of one or more further physical tracking devices provided that aggregate trace information is available prior to the obtaining of the one or more position estimates,
wherein the aggregate trace information is associated with the transportable asset and indicates at least one position of the transportable asset.

2. The method of claim 1, wherein a respective position estimate of the one or more position estimates is further associated with a certain time and/or date.

3. The method of any of the preceding claims, wherein the aggregate trace information enables a granular position tracking of the transportable asset independent of a position of a transportation vehicle that is used for a transportation of the transportable asset.

4. The method of any of the preceding claims, further comprising:
- obtaining an identification information of the transportable asset; and
- generating a logical entity comprising the aggregate trace information of the transportable asset based, at least in part, on the identification information, wherein the logical entity is generated prior to the obtaining of a first position estimate of the one or more position estimates or upon reception of a first position estimate of the one or more position estimates.

5. The method of any of the preceding claims, wherein the position of the transportable asset is trackable in real-time dependent upon the frequency with which the one or more position estimates are obtained.

6. The method of any of the preceding claims, further comprising:
- providing the aggregate trace information.

7. A method, performed by a physical tracking device, comprising:
- determining a position estimate indicative of a position of the physical tracking device; and
- providing the position estimate,
- wherein the physical tracking device is associated with one or more transportable assets.

8. The method of claim 7, wherein the physical tracking device is associated with the one or more transportable assets based, at least in part, on one or more pieces of identification information of the one or more transportable assets.

9. The method of claim 7 or claim 8, wherein the determining of the position estimate and the providing of the position estimate is performed and/or controlled multiple times.

10. The method of any of the claims 7 to 9, wherein the physical tracking device is moved along with the transportable asset by a transportation vehicle used for a transportation of the transportable asset at least for a part of a transportation chain.

11. The method of any of the claims 7 to 9, wherein the determining of the position estimate is based, at least in part, on a GNSS-based positioning system or a non GNSS-based positioning system.

12. An apparatus configured to perform and/or control or comprising respective means for performing and/or controlling the method of any of the claims 1 to 6.

13. A physical tracking device configured to perform and/or control or comprising respective means for performing and/or controlling the method of any of the claims 7 to 11.

14. A system, comprising:
- at least one apparatus according to claim 12; and
- one or more physical tracking devices according to claim 13.
